# EUROPEAN PATENT APPLICATION

(11) **EP 4 496 089 A1**
(43) Date of publication of application: **22.01.2025**
(21) Application number: 23770180.0
(22) Date of filing: 09.02.2023
(51) Int. Cl.: H01M 50/209, H01G 11/10, H01G 11/78, H01M 50/211, H01M 50/213, H01M 50/224

(54) **ELECTRIC POWER STORAGE DEVICE**

(30) Priority: 16.03.2022 JP 2022041266
(71) Applicant: GS Yuasa International Ltd., Kisshoin, Minami-ku, Kyoto-shi, Kyoto 601-8520 (JP)
(72) Inventor: IWASHIMA, Yasuyuki, Kyoto-shi, Kyoto 601-8520 (JP); MAEDA, Koki, Kyoto-shi, Kyoto 601-8520 (JP)
(74) Representative: Grünecker Patent- und Rechtsanwälte PartG mbB
(86) International application number: PCT/JP2023/004343
(87) International publication number: WO 2023/176219

(57) **Abstract**

An energy storage apparatus is provided with an energy storage element, a metallic exterior body, and a holding member. The energy storage element includes a side surface and a bottom surface, and is arrayed in such a posture that the side surface is oriented in a first direction and the bottom surface is oriented in a second direction orthogonal to the first direction. The exterior body includes a bottom wall portion opposed to the bottom surface in the second direction. The holding member is provided with a holding body portion extending along the side surface, and a holding member including a bottom surface cover portion connected to an end portion of the holding body portion in the second direction and covers a part of the bottom surface of the energy storage element. At least one of the exterior body and the holding member is provided with a protruding portion separating the bottom wall portion and the bottom surface cover portion from each other in the second direction, and is provided such that a size of the protruding portion fits within an array range of the bottom surface cover portion in the first direction.

## Description

### TECHNICAL FIELD

The present invention relates to an energy storage apparatus provided with an energy storage element.

### BACKGROUND ART

Patent Literature 1 discloses a battery module including a plurality of battery cells, and a plurality of cell barriers each provided between battery cells that are adjacent to each other, and including at least one or more flanges comprised of a first portion and a second portion. The cell barrier includes a lower flange at a position opposed to a bottom surface of the battery cell. Edge portions of the lower flanges of the two adjacent cell barriers can be arrayed in contact with each other.

### CITATION LIST

### Patent Literature

Patent Literature 1: JP 2013-4523A

### DISCLOSURE OF INVENTION

### PROBLEMS TO BE SOLVED BY THE INVENTION

The cell barrier provided in the above-described conventional battery module is a member which includes flange portions at positions opposed to the bottom surface and a pair of short side surfaces of the battery cell of a square shape, respectively, and holds an energy storage element by these flange portions. When the battery module provided with such cell barriers is accommodated in an exterior body, each of the plurality of cell barriers is accommodated in the exterior body in such a state that the flange portion arrayed to be opposed to the energy storage element is in contact with a bottom wall portion of the exterior body. When the exterior body is made of metal, how to secure electrical insulation between the energy storage element and the bottom wall portion of the exterior body becomes a problem.

However, due to a dimensional tolerance or the like, it is difficult to completely bring the edge portions of the adjacently arrayed flange portions into close contact with each other. When a gap is formed in at least a part of a region between these edge portions, it is feared that the electrical insulation between the energy storage element and the bottom wall portion, which is a metallic member at a position close to the energy storage element, may be lowered.

The present invention has been achieved by the inventor of the present invention by newly paying attention to the above problems, and an object of the present invention is to provide an energy storage apparatus with improved safety.

### MEANS FOR SOLVING THE PROBLEMS

A energy storage apparatus according to one aspect of the present invention is provided with: an energy storage element including a side surface and a bottom surface, and is arrayed in such a posture that the side surface is oriented in a first direction and the bottom surface is oriented in a second direction orthogonal to the first direction; a metallic exterior body including a bottom wall portion opposed to the bottom surface in the second direction; and a holding member including a holding body portion extending along the side surface, and a bottom surface cover portion connected to an end portion of the holding body portion in the second direction and covers a part of the bottom surface, in which at least one of the exterior body and the holding member is provided with a protruding portion separating the bottom wall portion and the bottom surface cover portion from each other in the second direction, and is provided such that a size of the protruding portion fits within an array range of the bottom surface cover portion in the first direction.

### EFFECT OF THE INVENTION

According to the present invention, an energy storage apparatus with improved safety can be provided.

### BRIEF DESCRIPTION OF EMBODIMENTS

FIG. 1 is a perspective view showing an outer appearance of an energy storage apparatus according to an embodiment.
FIG. 2 is an exploded perspective view of the energy storage apparatus according to the embodiment.
FIG. 3 is an exploded perspective view of an energy storage element unit according to the embodiment.
FIG. 4 is a partially cutaway perspective cross-sectional view of an exterior body main body according to the embodiment.
FIG. 5 is a perspective view showing an outer appearance of a cell holder according to the embodiment.
FIG. 6 is a partially cutaway perspective cross-sectional view showing the positional relationship between a cell holder and a protruding portion according to the embodiment.
FIG. 7 is a plan view showing an array layout of a plurality of protruding portions in an exterior body according to the embodiment.
FIG. 8 is a cross-sectional view schematically showing the state in which a cell holder according to the embodiment is supported by a protruding portion.
FIG. 9 is a cross-sectional view schematically showing the configuration of a cell holder according to a modification example of the embodiment.

### DESCRIPTION OF EMBODIMENTS

(1) An energy storage apparatus according to one aspect of the present invention is provided with: an energy storage element including a side surface and a bottom surface, and is arrayed in such a posture that the side surface is oriented in a first direction and the bottom surface is oriented in a second direction orthogonal to the first direction; a metallic exterior body including a bottom wall portion at a position opposed to the bottom surface in the second direction; and a holding member including a holding body portion extending along the side surface, and a bottom surface cover portion connected to an end portion of the holding body portion in the second direction and covers a part of the bottom surface, in which at least one of the exterior body and the holding member is provided with a protruding portion separating the bottom wall portion and the bottom surface cover portion from each other in the second direction, and is provided such that a size of the protruding portion fits within an array range of the bottom surface cover portion in the first direction.

According to this configuration, the energy storage element is protected by the holding member arrayed to cover the side surface and the bottom surface of the energy storage element. Further, the bottom surface cover portion of the holding member and the bottom wall portion of the metallic exterior body are separated from each other by the protruding portion. The protruding portion is provided such that a size of the protruding portion fits within the array range of the bottom surface cover portion in the first direction. That is, when seen from an alignment direction of the energy storage element and the bottom surface cover portion, the bottom surface cover portion is arrayed in such a state that the bottom surface cover portion covers the protruding portion at least in the first direction. Therefore, a creepage distance between the energy storage element and a metallic member (the protruding portion or the bottom wall portion) which is at a position close to the energy storage element in the second direction can be made relatively long. As described above, in the energy storage apparatus according to this aspect, while the metallic exterior body having high impact resistance and the like is employed, electrical insulation between the energy storage element and the metallic member, which is at a position close to the bottom surface of the energy storage element, can be more reliably ensured. That is, the energy storage apparatus according to this aspect is an energy storage apparatus with improved safety.

(2) In the energy storage apparatus according to (1) above, the protruding portion may be a part of the exterior body and may be projected from the bottom wall portion.

According to this configuration, since the protruding portion is a part of the metallic exterior body, the stability or reliability of support by the holding member by means of the protruding portion can be improved, or the life of the protruding portion can be prolonged. Thus, the safety of the energy storage apparatus can be further improved. Further, an existing holding member can be employed as the holding member provided in the energy storage apparatus according to this aspect.

(3) In the energy storage apparatus according to (2) above, the exterior body may include a side wall portion opposed to the energy storage element in a direction orthogonal to the second direction, and the protruding portion may be connected to the side wall portion.

According to this configuration, since the protruding portion is connected to both the bottom wall portion and the side wall portion extending in the directions intersecting each other, the holding member can be supported more stably or more reliably. Further, since the protruding portion is provided at a connection portion between the bottom wall portion and the side wall portion, displacement or deformation of one of the bottom wall portion and the side wall portion relative to the other is suppressed. That is, the protruding portion may function as a part that suppresses deformation of the exterior body. Thus, the safety of the energy storage apparatus can be further improved.

(4) In the energy storage apparatus according to any one of (1) to (3) above, when seen from the second direction, the bottom surface cover portion may be formed in such a length as to be projected relative to the protruding portion in the first direction.

According to this configuration, by changing a projected length of the bottom surface cover portion from the protruding portion in the first direction, a creepage distance between the energy storage element and the metallic member positioned lateral to the energy storage element in the second direction can be changed. That is, the creepage distance can be extended without increasing a projected length (the width in the second direction) of the protruding portion from the bottom wall portion, for example. Thus, the safety of the energy storage apparatus can be further improved.

(5) In the energy storage apparatus according to any one of (1) to (4) above, the bottom surface cover portion may be elongated in a third direction orthogonal to the first direction and the second direction, and the protruding portion may be arrayed between each of both end portions of the bottom surface cover portion in the third direction and the bottom wall portion.

According to this configuration, since the protruding portions are arrayed at the both end portions of the bottom surface cover portion in a longitudinal direction thereof, the holding member and the energy storage element that is held by the holding member are supported by these two protruding portions with good balance.

(6) In the energy storage apparatus according to any one of (1) to (5) above, a plurality of energy storage elements included in the energy storage element may be arrayed to be aligned in the first direction, a plurality of holding members included in the holding member may be arrayed to correspond to the plurality of energy storage elements, and the protruding portion may be arrayed between the bottom surface cover portion of each of the plurality of holding members and the bottom wall portion.

According to this configuration, the protruding portions are arrayed in a dispersed manner in the first direction. Therefore, no protruding portion exists at a position opposed to a gap between the adjacently arrayed bottom surface cover portions. This is advantageous, for example, in the circulation of air inside the exterior body (i.e., heat dissipation of the energy storage element). The plurality of holding members being arrayed to correspond to the plurality of energy storage elements means that at least two holding members and at least two energy storage elements are alternately arrayed in the first direction.

(7) In the energy storage apparatus according to any one of (1) to (6) above, the bottom surface cover portion may include a projecting portion projected toward the bottom surface of the energy storage element, and the protruding portion may be arrayed in a range that overlaps the holding body portion but does not overlap the projecting portion when seen from the second direction.

According to this configuration, when seen from the second direction, the protruding portion is at a position not overlapping the projecting portion. Accordingly, when the projecting portion is pressed from the bottom surface of the energy storage element, a portion of the bottom surface cover portion including the protruding portion is able to warp in the second direction. Thus, the bottom surface cover portion can push back the energy storage element in a projecting direction (i.e., a direction opposite to the second direction) of the projecting portion. As a result, the holding member can hold the energy storage element more reliably or more accurately.

In the following description and the drawings, a direction in which short side surfaces of the energy storage element are opposed to each other or a longitudinal direction of a cover plate of a container of the energy storage element is defined as a Y-axis direction. An alignment direction of a plurality of energy storage elements or a direction in which long side surfaces of the energy storage element are opposed to each other is defined as an X-axis direction. An alignment direction of a main body of an exterior body (an exterior body main body) and a cover body of an energy storage apparatus or an up-down direction of the same is defined as a Z-axis direction. The X-axis direction, the Y-axis direction, and the Z-axis direction are directions intersecting each other (orthogonal to each other in the present embodiment). Although there may be case where the Z-axis direction does not conform to the up-down direction depending on a use mode, the Z-axis direction will be described as the up-down direction in the following for convenience of description.

In the following description, for example, the X-axis positive direction indicates a direction of arrow of the X-axis, and the X-axis negative direction indicates a direction opposite to the X-axis positive direction. The same applies to the Y-axis direction and the Z-axis direction. When "X-axis direction" is simply mentioned, the "X-axis direction" is intended as both directions parallel to the X-axis or either one of the directions. The same applies to the terms relating to the Y-axis and the Z-axis.

Further, expressions indicating relative directions or postures, such as parallel and orthogonal, include cases where the directions or postures are not parallel or orthogonal in a strict sense. For example, two directions being orthogonal to each other means not only that the two directions are completely orthogonal to each other, but also that the two directions are substantially orthogonal to each other, in other words, a difference by several percent or so, for example, is included in the scope. In the following description, when the expression "insulation" is used, "insulation" is intended as "electrical insulation".

### (Embodiment)

### [1. General Description of Energy storage apparatus]

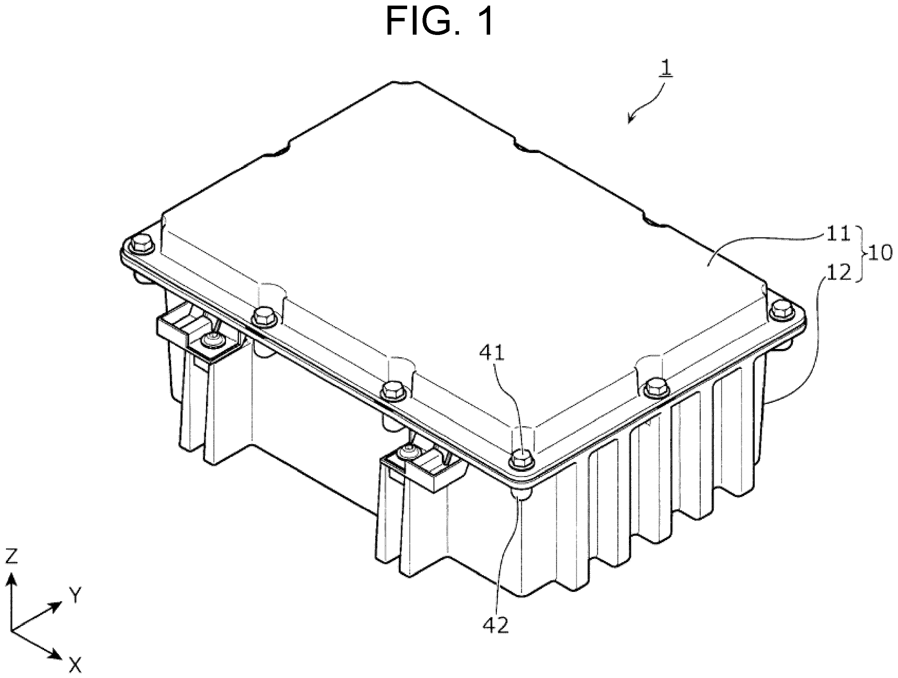

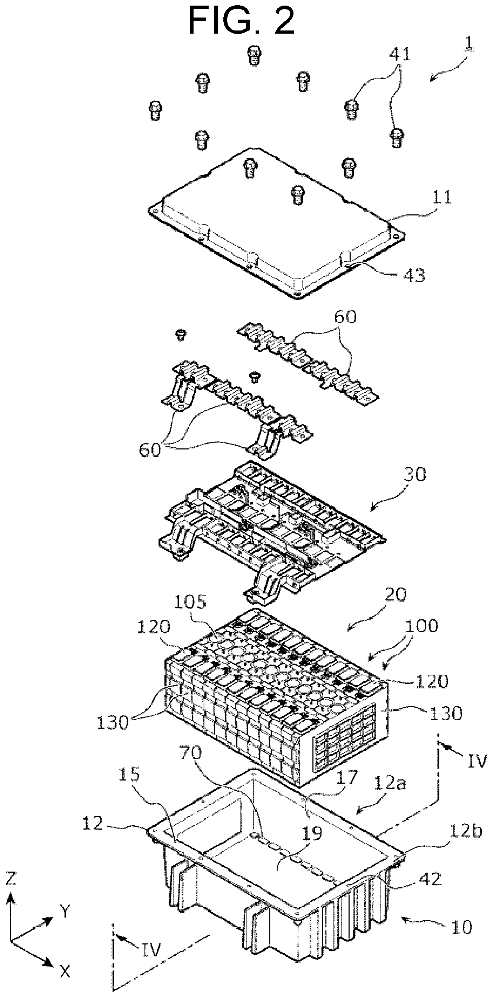

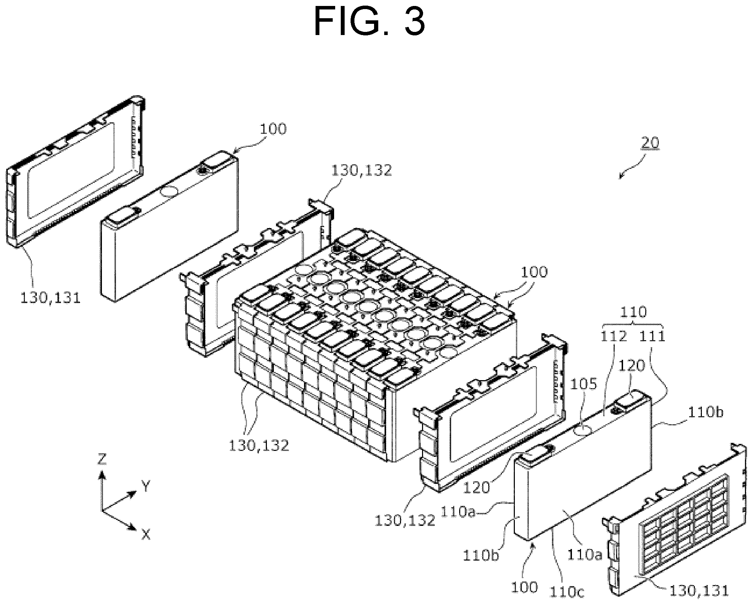

First, a schematic configuration of an energy storage apparatus 1 according to an embodiment will be described. FIG. 1 is a perspective view showing an outer appearance of the energy storage apparatus 1 according to the embodiment. FIG. 2 is an exploded perspective view of the energy storage apparatus 1 according to the embodiment. FIG. 3 is an exploded perspective view of an energy storage element unit 20 according to the embodiment. In addition to members illustrated in FIG. 2 and the subsequent figures, other members, such as sensors for measuring the temperature and voltage, and electric wires connected to the sensors, are also accommodated inside an exterior body 10. However, illustration and description of these members are omitted.

The energy storage apparatus 1 is a device which can be charged with electricity from the outside and can discharge electricity to the outside. The energy storage apparatus 1 is, for example, a battery module (an assembled battery) used for an electric energy storage purpose or a power supply purpose. Specifically, the energy storage apparatus 1 is used as, for example, a battery for driving or starting an engine of a movable body such as an automobile, a motorcycle, a watercraft, a vessel, a snowmobile, an agricultural machine, a construction machine, or a railway vehicle for electric railway. As the above-mentioned automobile, an electric vehicle (EV), a hybrid electric vehicle (HEV), a plug-in hybrid electric vehicle (PHEV), and a fossil fuel (gasoline, light oil, liquefied natural gas, or the like) automobile are exemplified. As the above-mentioned railway vehicle for electric railway, a train, a monorail, a linear induction motor train, and a hybrid train provided with both a diesel engine and an electric motor are exemplified. The energy storage apparatus 1 can also be used as a stationary battery or the like for home or business, etc.

As illustrated in FIGS. 1 and 2, the energy storage apparatus 1 is provided with the exterior body 10 and the energy storage element unit 20, which is accommodated in the exterior body 10. A bus bar holder 30, which holds a bus bar 60 joined to an energy storage element 100, is arrayed above the energy storage element unit 20.

The exterior body 10 is a box-shaped container (a module case) which constitutes a housing of the energy storage apparatus 1. That is, the exterior body 10 is disposed on the outside of the energy storage element unit 20 and the bus bar holder 30, fixes these components at predetermined positions, and protects them from impact or the like. In the present embodiment, the exterior body 10 is formed of a metal such as iron, aluminum, or aluminum alloy.

The exterior body 10 includes an opening portion 12a which is provided at an end portion in the Z-axis positive direction thereof, and allows the energy storage element unit 20 to be inserted therein, and a bottom wall portion 19 which is provided at a position opposed to the opening portion 12a. Specifically, the exterior body 10 is provided with an exterior body main body 12 and a cover body 11, and the opening portion 12a and the bottom wall portion 19 are provided in the exterior body main body 12. The exterior body main body 12 is a bottom-closed rectangular cylindrical housing in which the opening portion 12a is formed, and accommodates therein the energy storage element unit 20. The exterior body main body 12 includes side wall portions 15 and 17 which are opposed to each other in the Y-axis direction, and serve as a partition between the inside and the outside of the exterior body 10. The energy storage element unit 20 is disposed between the side wall portion 17 and the side wall portion 15 in the Y-axis direction. The exterior body 10 may be provided with an element not illustrated in FIGS. 1 and 2, such as an exhaust pipe for discharging gas inside the exterior body 10 to the outside.

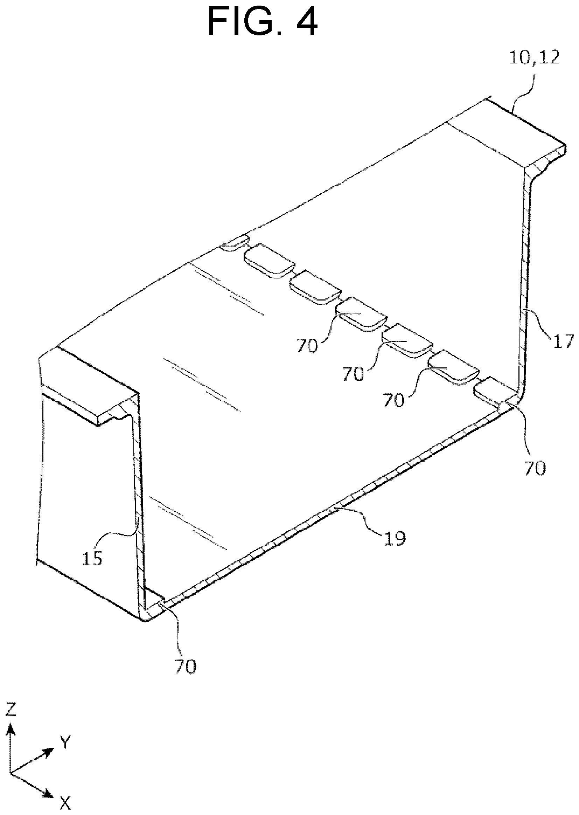

In the present embodiment, a protruding portion 70 is arrayed on the bottom wall portion 19 of the exterior body 10 (more specifically, the exterior body main body 12) (see FIG. 2). The protruding portion 70 supports a cell holder 130 in a state in which the energy storage element 100 is held such that the cell holder 130 is separated from the bottom wall portion 19 of the exterior body 10. The configurations of the protruding portion 70 and the periphery of the protruding portion 70 will be described later with reference to FIGS. 4 to 8.

The cover body 11 is a rectangular member which closes the opening portion 12a of the exterior body main body 12. The cover body 11 is joined to the exterior body main body 12 by a plurality of bolts 41, whereby the cover body 11 is fixed to the exterior body main body 12. Specifically, a through hole 43 through which the bolt 41 penetrates is provided at a peripheral edge portion of the cover body 11, and a fixing hole portion 42 is provided at an opening peripheral edge portion 12b, which is the peripheral edge portion of the opening portion 12a of the exterior body main body 12. The bolt 41 is screwed into the fixing hole portion 42 of the exterior body main body 12 in a state in which the bolt 41 is penetrated through the through hole 43 of the cover body 11. As a result, the cover body 11 is joined to the opening peripheral edge portion 12b of the exterior body main body 12.

The energy storage element unit 20 includes a plurality of energy storage elements 100 and the cell holder 130 which holds each of the plurality of energy storage elements 100. The energy storage element 100 is a secondary battery (a single cell) capable of charging electricity and discharging electricity, and more specifically, is a non-aqueous electrolyte secondary battery such as a lithium-ion secondary battery. As illustrated in FIG. 3, the energy storage element 100 includes a flat rectangular parallelepiped (square) container 110 and a pair of (positive and negative) electrode terminals 120 fixed to the container 110. Inside the container 110, an electrode body, a current collector, and an electrolytic solution, etc. (not illustrated) are accommodated. As the electrode body of the energy storage element 100, a wound electrode body formed by winding a layered material in which a separator is arrayed to be interposed between a positive plate and a negative plate is exemplified. Other than the above, a layered (stacked) electrode body formed by layering a plurality of flat plate-shaped polar plates, or a bellows-type electrode body formed by folding a polar plate into the shape of a bellows may be provided in the energy storage element 100.

The energy storage element 100 is not limited to the non-aqueous electrolyte secondary battery, and may be a secondary battery other than the non-aqueous electrolyte secondary battery, or may be a capacitor. The energy storage element 100 may not be a secondary battery, but may be a primary battery which can use electricity that is stored not by being charged by the user. The energy storage element 100 may be a battery using a solid electrolyte. The energy storage element 100 may be a pouch-type energy storage element. The shape of the energy storage element 100 is not limited to the square shape mentioned above, but may be other shapes such as a polygonal columnar shape, a columnar shape, an elliptical columnar shape, a long columnar shape, or the like.

In the present embodiment, as illustrated in FIG. 3, the container 110 includes a container body 111 and a cover plate 112 for closing an opening of the container body 111. The container 110 has a configuration in which the interior of the container 110 is sealed, which is obtained by accommodating the electrode body and the like inside the container body 111, and thereafter having the container body 111 and the cover plate 112 joined to each other by welding or the like.

The material of the container 110 (the container body 111 and the cover plate 112) is not particularly limited. For example, while a weldable (joinable) metal such as stainless steel, aluminum, aluminum alloy, iron, or a plated steel plate can be employed, a resin can also be used.

The container body 111 includes a pair of long side surfaces 110a, a pair of short side surfaces 110b, and a bottom surface 110c which is arrayed at a position opposed to the cover plate 112. The long side surface 110a and the bottom surface 110c are examples of a side surface and a bottom surface of an energy storage element.

On the cover plate 112, the positive and negative electrode terminals 120 and a gas discharge valve 105 are disposed. The gas discharge valve 105 is a portion which, when an internal pressure of the container 110 is excessively increased, opens (i.e., the valve is opened) in response to the excessively increased internal pressure, thereby discharging the gas inside the container 110 to the outside. In the energy storage element unit 20, each of the plurality of the energy storage elements 100 is aligned in such a posture that the long side surface 110a is oriented in the alignment direction (X-axis direction) and the bottom surface 110c is oriented in the Z-axis negative direction. In the present embodiment, the X-axis direction is an example of a first direction, and the Z-axis negative direction is an example of a second direction orthogonal to the first direction. In the present embodiment, the first direction corresponds to a direction in which two long side surfaces 110a of the container body of the energy storage element are opposed to each other. It can be said that the first direction corresponds to a layered direction of the energy storage elements. In the present embodiment, the long side surface 110a of the energy storage element is oriented in the layered direction of the energy storage elements. In the present embodiment, the second direction corresponds to an alignment direction of the cover plate 112 and the container body 111 of the energy storage element.

The energy storage element unit 20 includes twelve energy storage elements 100 configured as described above. Each of the twelve energy storage elements 100 is disposed between two cell holders 130 in the present embodiment. The energy storage element unit 20 according to the present embodiment includes thirteen cell holders 130. Among these cell holders 130, when a pair of cell holders 130 positioned at both ends in the X-axis direction is to be distinguished from the other cell holders, such cell holders 130 are referred to as cell holders 131. Among these cell holders 130, when the cell holder 130 located between two energy storage elements 100 that are adjacent to each other is to be distinguished from the other cell holders, such a cell holder 130 is referred to as a cell holder 132.

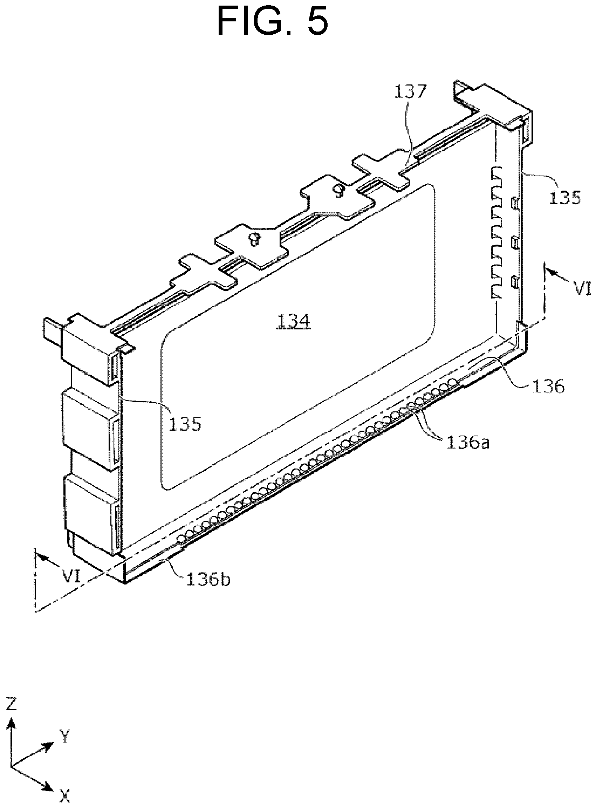

The cell holder 130 is an example of a holding member, and has the function of stabilizing the position of the energy storage element 100 by holding the energy storage element 100. The cell holder 130 further has the function of insulating the container 110 of the energy storage element 100 from the container 110 of another energy storage element 100 adjacent to the aforementioned energy storage element 100. The cell holder 130 is formed of a resin material having electric insulating properties. As the resin material, polycarbonate (PC), polypropylene (PP), polyethylene (PE), polystyrene (PS), polyphenylene sulfide resin (PPS), polyphenylene ether (PPE (including modified PPE)), polyethylene terephthalate (PET), polybutylene terephthalate (PBT), polyether ether ketone (PEEK), tetrafluoroethylene-perfluoroalkyl vinyl ether (PFA), polytetrafluoroethylene (PTFE), polyether sulfone (PES), polyamide (PA), or ABS resin is exemplified. Preferably, the cell holder 130 should be formed of a material having volume resistivity of 1×1010 Ωm or more. A detailed configuration of the cell holder 130 will be described later with reference to FIG. 5 and the like.

The bus bar holder 30 is a flat rectangular insulating member which is arrayed to be opposed to the cover plate 112 of the energy storage element 100 and holds a plurality of bus bars 60. The bus bar holder 30 is formed of, for example, any of the resin materials having electric insulating properties that can be adopted as the material for forming the cell holder 130 described above. The bus bar 60 arrayed on the bus bar holder 30 is positioned with respect to the electrode terminal 120, which is the joining counterpart, and is joined to the electrode terminal 120 by laser welding, for example, in such a state. In the present embodiment, of the twelve energy storage elements 100 included in the energy storage element unit 20, three energy storage elements 100 aligned consecutively are connected in parallel by the bus bars 60. As a result, four sets of energy storage elements 100 in which the energy storage elements 100 are connected in parallel in each pair are formed. The four sets of energy storage elements 100 are connected in series by three bus bars 60.

The electrode terminals 120 of the sets of energy storage elements 100 at both end portions among the four sets of energy storage elements 100 that are connected in series respectively correspond to the positive electrode (an overall positive terminal) and the negative electrode (an overall negative terminal) of the energy storage element unit 20. In the present embodiment, the positive electrode terminals 120 of a set of (three) energy storage elements 100 at an end portion in the X-axis negative direction among the twelve energy storage elements 100 correspond to the positive electrode (the overall positive terminal) of the energy storage element unit 20. The negative electrode terminals 120 of a set of (three) energy storage elements 100 at an end portion in the X-axis positive direction among the twelve energy storage elements 100 correspond to the negative electrode (the overall negative terminal) of the energy storage element unit 20.

Although not illustrated in the drawing, the side wall portion 15 of the exterior body 10 is provided with an opening portion through which an end portion of the bus bar 60 joined to each of the positive electrode and the negative electrode of the energy storage element unit 20 penetrates. The respective two end portions of the bus bar 60 are exposed to the outside of the exterior body 10 through the opening portions provided in the side wall portion 15 (see FIG. 1), and function as a positive electrode external terminal and a negative electrode external terminal of the energy storage apparatus 1.

A control device for controlling the state of charge of the plurality of energy storage elements 100 included in the energy storage element unit 20 and an electric device such as a relay may be arrayed inside the exterior body 10. In this case, the energy storage apparatus 1 may be provided with a positive electrode external terminal and a negative electrode external terminal which are fixed to the cover body 11 and are electrically connected to the energy storage element unit 20 via the electric device and the bus bar 60.

The electrical connection mode of the twelve energy storage elements 100 by way of the bus bars 60 is not limited to the mode described above, and all of the twelve energy storage elements 100 may be connected in series by the plurality of bus bars 60. The number of energy storage elements 100 provided in the energy storage element unit 20 is not limited to twelve. The number of energy storage elements 100 provided in the energy storage element unit 20 may be one or more.

In the energy storage apparatus 1 configured as described above, the protruding portion 70 is arrayed between the cell holder 130 which holds the energy storage element 100 and the bottom wall portion 19 of the metallic exterior body 10. Thus, a creepage distance between the energy storage element 100 and a metallic member which is at a position close to the energy storage element 100 in the Z-axis negative direction can be set to a length necessary for ensuring safety. The configurations of the protruding portion 70 and the periphery of the protruding portion 70 having such an advantage will be described later with reference to FIGS. 4 to 8.

### [2. Configurations of Protruding Portion and Periphery Thereof]

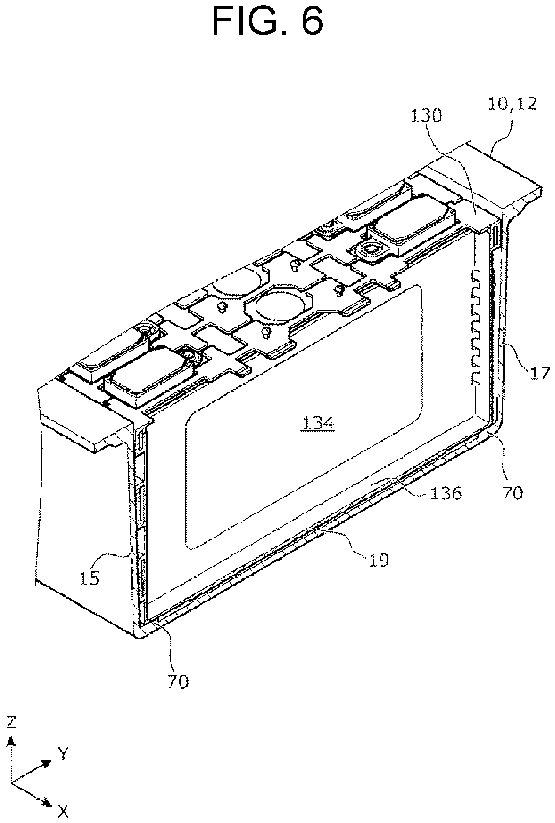

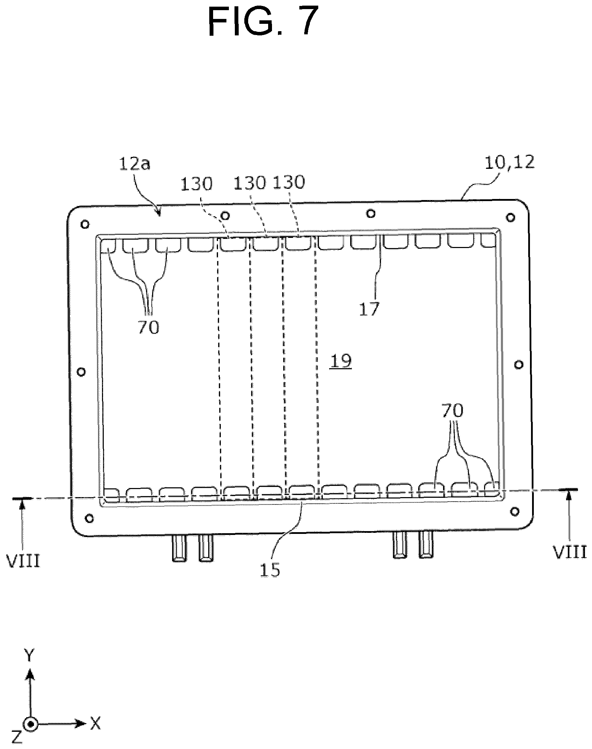

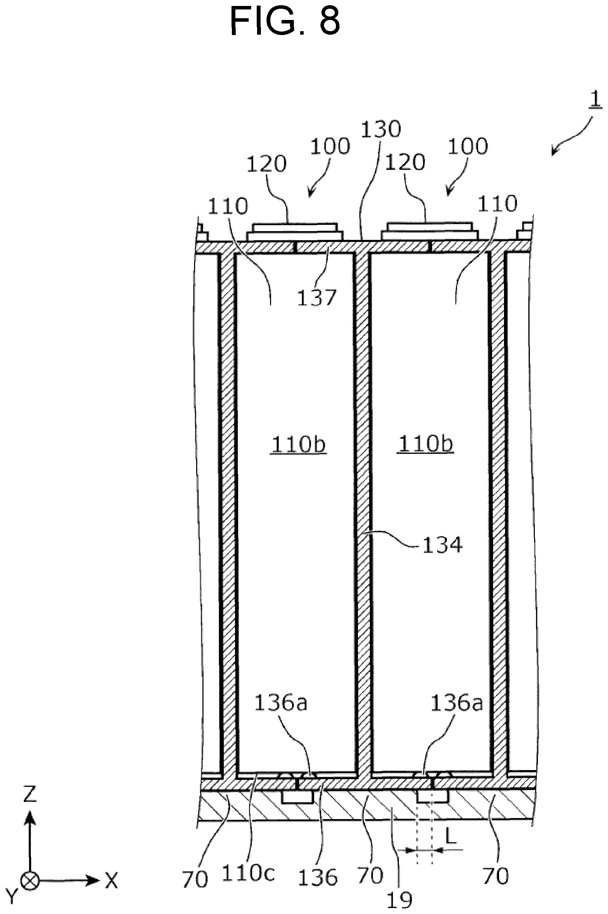

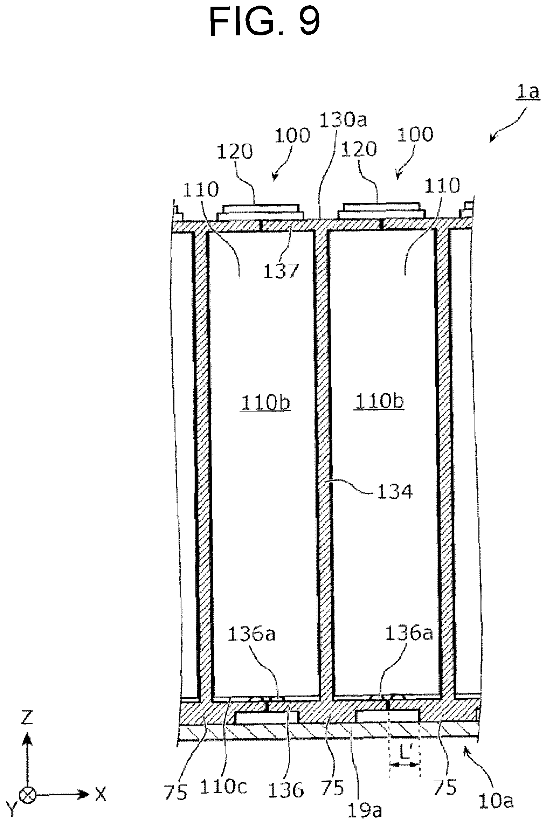

FIG. 4 is a partially cutaway perspective cross-sectional view of the exterior body main body 12 according to the embodiment. In FIG. 4, the exterior body main body 12 is illustrated in a state of being cut along a YZ plane passing through line IV-IV of FIG. 2. FIG. 5 is a perspective view showing an outer appearance of the cell holder 130 according to the embodiment. FIG. 6 is a partially cutaway perspective cross-sectional view showing the positional relationship between the cell holder 130 and the protruding portion 70 according to the embodiment. In FIG. 6, in order to clearly illustrate the positional relationship of the above, the energy storage element 100 is removed from the cell holder 130 at an end portion in the Z-axis positive direction in FIG. 6, and the exterior body main body 12 and the cell holder 130 are illustrated in a state of being cut along a YZ plane passing through line VI-VI of FIG. 5. FIG. 7 is a plan view showing an array layout of a plurality of protruding portions 70 in the exterior body 10 according to the embodiment. In FIG. 7, in order to illustrate the positional relationship between the protruding portion 70 and the cell holder 130, a rough outer shape of the cell holder 130 as seen in a plan view is represented by a dotted-line rectangle. FIG. 8 is a cross-sectional view schematically showing the state in which the cell holder 130 according to the embodiment is supported by the protruding portion 70. The position of a cross section illustrated in FIG. 8 corresponds to the position of VIII-VIII line of FIG. 7. In FIG. 8, the energy storage element 100 is illustrated not in a cross-sectional view but in a side view, and an overlap portion 136b that a bottom surface cover portion 136 of the cell holder 130 includes is not illustrated. These supplementary notes related to FIG. 8 are also applied to FIG. 9 which will be described later.

As illustrated in FIG. 4 and FIGS. 6 to 8, in the present embodiment, the exterior body main body 12 of the exterior body 10 includes the protruding portion 70. The protruding portion 70 is provided to project from the bottom wall portion 19. In the present embodiment, the protruding portion 70 is a part of the metallic exterior body 10, and the protruding portion 70 is also metallic. The protruding portion 70 is also connected to the side wall portion 17 which serves as a partition between the inside and the outside of the exterior body 10. In the present embodiment, the plurality of protruding portions 70 are arrayed to be aligned in the X-axis direction to correspond to a plurality of cell holders 130 aligned in the X-axis direction. The plurality of protruding portions 70 being arrayed to be aligned in the X-axis direction to correspond to the plurality of cell holders 130 means that the protruding portion 70 is arrayed between the bottom surface cover portion 136 of each of the plurality of cell holders 130 and the bottom wall portion 19. As illustrated in FIGS. 4 and 7, a row of the protruding portions 70 aligned in the X-axis direction as described above is also disposed at a position along the side wall portion 15. The plurality of protruding portions 70 arrayed along the side wall portion 15 are connected to the bottom wall portion 19 and the side wall portion 15.

The cell holder 130 illustrated in FIG. 5 is arrayed in the Z-axis positive direction of the protruding portion 70 which is arrayed as described above. The cell holder 130 includes a holder body portion 134, a pair of side surface cover portions 135, the bottom surface cover portion 136, and an upper surface cover portion 137. The holder body portion 134 is disposed along the long side surface 110a of the energy storage element 100. The side surface cover portions 135 as a pair are respectively connected to both end portions of the holder body portion 134 in the Y-axis direction. Each of the pair of side surface cover portions 135 covers a part of the short side surface 110b of the energy storage element 100. The bottom surface cover portion 136 is connected to an end portion of the holder body portion 134 in the Z-axis negative direction, and covers a part of the bottom surface 110c of the energy storage element 100. The side surface cover portion 135 is connected to each of both end portions of the bottom surface cover portion 136 in the Y-axis direction. The upper surface cover portion 137 is connected to an end portion of the holder body portion 134 in the Z-axis positive direction, and covers a part of an upper surface of the cover plate 112 of the energy storage element 100.

In the cell holder 130 configured as described above, as illustrated in FIG. 5, the bottom surface cover portion 136 is provided with a projecting portion 136a, which is projected toward the bottom surface 110c of the energy storage element 100, at an end portion of the bottom surface cover portion 136 in a projecting direction of projecting from the holder body portion 134. Specifically, a plurality of projecting portions 136a aligned in the Y-axis direction are arrayed in a predetermined range including a central part of the bottom surface cover portion 136 in the Y-axis direction, which is a portion that is easily bent. Each of the plurality of projecting portions 136a presses, when the energy storage element 100 is held by the cell holder 130, the bottom surface 110c of the energy storage element 100 in the Z-axis positive direction. Consequently, a position of the energy storage element 100 in the Z-axis direction is determined by a lower surface (a surface facing the Z-axis negative direction) of the upper surface cover portion 137 of the cell holder 130.

The bottom surface cover portion 136 further includes the overlap portion 136b, which is a portion overlapping an end portion of the bottom surface cover portion 136 of adjacently arrayed another cell holder 130 at an end portion of the bottom surface cover portion 136 in the projecting direction of projecting from the holder body portion 134. In order to fill a space between the two bottom surface cover portions 136 arrayed to be opposed to each other in the X-axis direction, the two bottom surface cover portions 136 are respectively provided with the overlap portions 136b which overlap one another. However, due to a dimensional tolerance, minute unevenness in the shape, or the like, it is difficult to completely shield a space vertically in the entire area of the two overlap portions 136b in the Y-axis direction, and a gap is existent between the two overlap portions 136b. A gap exists between the two bottom surface cover portions 136 aligned in the X-axis direction.

It is difficult to improve electrical insulation between the energy storage element 100 and the bottom wall portion 19 of the exterior body 10 only by aligning the bottom surface cover portions 136. In the present embodiment, the protruding portion 70 is provided between the bottom surface cover portion 136 of the cell holder 130 and the bottom wall portion 19 of the exterior body 10. The cell holder 130 is arrayed to be separated from the bottom wall portion 19 by being supported by the protruding portion 70.

Specifically, when the cell holder 130 holding the energy storage element 100 is accommodated in the exterior body 10, as illustrated in FIGS. 6 and 7, the cell holder 130 is supported by two protruding portions 70. The two protruding portions 70 are arrayed between each of the both end portions of the bottom surface cover portion 136 in the Y-axis direction and the bottom wall portion 19 of the exterior body 10. As illustrated in FIGS. 7 and 8, the protruding portion 70 is formed in a size that fits within an array range of the bottom surface cover portion 136 in the X-axis direction. The bottom surface cover portion 136 of the cell holder 130 is separated from the bottom wall portion 19 of the exterior body 10 by the protruding portion 70.

More specifically, as illustrated in FIG. 8, the bottom surface cover portion 136 is projected from the protruding portion 70 in the X-axis direction, and a projected length of the bottom surface cover portion 136 is L (L > 0). In FIG. 8, the bottom surface cover portion 136 is illustrated in such a posture that the bottom surface cover portion 136 is parallel to the bottom surface 110c of the energy storage element 100. However, in practice, as the projecting portions 136a are pressed by the bottom surface 110c of the energy storage element 100, the bottom surface cover portion 136 is able to bend (warp) downward (i.e., in the Z-axis negative direction). Consequently, a tolerance of the size of the energy storage element 100 in the Z-axis direction is absorbed, and the position of the energy storage element 100 in the Z-axis direction is determined by the upper surface cover portion 137. The shortest distance between the bottom surface 110c and the protruding portion 70, which is a metallic member closest to the bottom surface 110c, is a direct distance in the Z-axis direction. When the bottom surface cover portion 136 and the bottom surface 110c of the energy storage element 100 are brought close to each other as a result of the bottom surface cover portion 136 being bent downward, the direct distance is of a level slightly longer than the thickness of the bottom surface cover portion 136. However, the bottom surface cover portion 136 is projected from the protruding portion 70 in the X-axis direction by the projected length L. Accordingly, as a creepage distance between the energy storage element 100 and the protruding portion 70, at least a length obtained by adding the projected length L to the thickness of the bottom surface cover portion 136 is secured. The energy storage element 100 and a metallic member (the protruding portion 70 in the present embodiment) that is positioned below (i.e., in the Z-axis negative direction) relative to the energy storage element 100 are more reliably insulated from each other. In the present embodiment, the protruding portion 70 is provided integrally with the exterior body 10. However, the cell holder 130 may include a protruding portion which is projected in the Z-axis negative direction. Even in this case, a distance that is longer than the thickness of the bottom surface cover portion 136 is secured as a creepage distance between the energy storage element 100 and a metallic member (the bottom wall portion 19) below the energy storage element 100 by virtue of the protruding portion and the bottom surface cover portion 136. An aspect in which the cell holder 130 includes the protruding portion will be described later as a modification example of the embodiment.

As described above, the energy storage apparatus 1 according to the present embodiment is provided with the energy storage element 100, the metallic exterior body 10, and the cell holder 130. The energy storage element 100 includes the long side surface 110a and the bottom surface 110c, and is arrayed in such a posture that the long side surface 110a is oriented in the X-axis direction and the bottom surface 110c is oriented in the Z-axis negative direction orthogonal to the X-axis direction. The exterior body 10 includes the bottom wall portion 19 opposed to the bottom surface 110c of the energy storage element 100 in the Z-axis negative direction. The cell holder 130 includes the holder body portion 134 extending along the long side surface 110a of the energy storage element 100, and the bottom surface cover portion 136 connected to the end portion of the holder body portion 134 in the Z-axis negative direction and covers a part of the bottom surface 110c of the energy storage element 100. At least one of the exterior body 10 and the cell holder 130 is provided with the protruding portion 70 separating the bottom wall portion 19 and the bottom surface cover portion 136 from each other in the Z-axis negative direction, and is provided such that a size of the protrusion portion 70 fits within the array range of the bottom surface cover portion 136 in the X-axis direction.

According to this configuration, the energy storage element 100 is protected by the cell holder 130 arrayed to cover the long side surface 110a and the bottom surface 110c of the energy storage element 100. Further, the bottom surface cover portion 136 of the cell holder 130 and the bottom wall portion 19 of the metallic exterior body 10 are separated from each other by the protruding portion 70. The protruding portion 70 is formed such that a size of the protruding portion 70 fits within the array range of the bottom surface cover portion 136 in the X-axis direction. When seen from the alignment direction of the energy storage element 100 and the bottom surface cover portion 136, the bottom surface cover portion 136 is arrayed in such a state that the bottom surface cover portion 136 covers the protruding portion 70 at least in the X-axis direction. The creepage distance between the energy storage element 100 and a metallic member which is at a position close to the energy storage element 100 in the Z-axis negative direction can be made relatively long. As described above, in the energy storage apparatus 1 according to the present embodiment, while the metallic exterior body 10 having high impact resistance and the like is employed, electrical insulation between the energy storage element 100 and the metallic member, which is at a position close to the bottom surface 110c of the energy storage element 100, can be more reliably ensured. The energy storage apparatus 1 according to the present embodiment is an energy storage apparatus 1 with improved safety.

In the present embodiment, the protruding portion 70 is a part of the exterior body 10 and is projected from the bottom wall portion 19.

As described above, in the present embodiment, since the protruding portion 70 is a part of the metallic exterior body 10, the stability or reliability of the support by the cell holder 130 by means of the protruding portion 70 can be improved, or the life of the protruding portion 70 can be prolonged. An existing cell holder 130 can be employed as the cell holder 130 provided in the energy storage apparatus according to this aspect. While the protruding portion 70, which is a part of the exterior body 10, is arrayed at a position relatively close to the energy storage element 100, the bottom surface cover portion 136 is arrayed in such a state that the bottom surface cover portion 136 covers the protruding portion 70 at least in the X-axis direction, as described above. Therefore, by virtue of the bottom surface cover portion 136, it is possible to set the creepage distance between the energy storage element 100 and the protruding portion 70 to a length necessary for ensuring safety.

In the present embodiment, the exterior body 10 includes the side wall portion 17 opposed to the energy storage element 100 in a direction orthogonal to the Z-axis negative direction. As illustrated in FIGS. 4 and 7, the protruding portion 70 is connected to the side wall portion 17.

As described above, since the protruding portion 70 according to the present embodiment is connected to both the bottom wall portion 19 and the side wall portion 17 extending in the directions intersecting each other, the cell holder 130 can be supported more stably or more reliably. Since the protruding portion 70 is provided at a connection portion between the bottom wall portion 19 and the side wall portion 17, displacement or deformation of one of the bottom wall portion 19 and the side wall portion 17 relative to the other is suppressed. The protruding portion 70 may function as a part that suppresses deformation of the exterior body 10. In the present embodiment, as illustrated in FIGS. 4 and 7, a plurality of protruding portions 70 are also arrayed at positions along the side wall portion 15. The plurality of protruding portions 70 are connected to both the bottom wall portion 19 and the side wall portion 15. According to each of the plurality of protruding portions connected to the bottom wall portion 19 and the side wall portion 15, the same advantage as that brought about by the protruding portions 70 connected to the bottom wall portion 19 and the side wall portion 17 is achieved.

In the present embodiment, when seen from the Z-axis negative direction, the bottom surface cover portion 136 is formed in such a length as to be projected relative to the protruding portion 70 in the X-axis direction. Specifically, as illustrated in FIG. 8, the projected length of the bottom surface cover portion 136 from the protruding portion 70 in the X-axis direction is L.

According to this configuration, by changing the projected length L of the bottom surface cover portion 136 from the protruding portion 70 in the X-axis direction, a creepage distance between the energy storage element 100 and the metallic member positioned lateral to the energy storage element 100 in the second direction can be changed. The creepage distance can be extended without increasing, for example, the projected length (the width in the Z-axis direction) of the protruding portion 70 from the bottom wall portion 19.

In the present embodiment, the bottom surface cover portion 136 is elongated in the Y-axis direction orthogonal to the X-axis direction and the Z-axis negative direction. As illustrated in FIGS. 6 and 7, the protruding portion 70 is arrayed between each of the both end portions of the bottom surface cover portion 136 in the Y-axis direction and the bottom wall portion 19.

As described above, in the present embodiment, since the protruding portions 70 are arrayed at the both end portions of the bottom surface cover portion 136 in a longitudinal direction thereof (i.e., the Y-axis direction), the cell holder 130 and the energy storage element 100 that is held by the cell holder 130 are supported by these two protruding portions 70 with good balance.

In the present embodiment, the plurality of energy storage elements 100 are arrayed to be aligned in the X-axis direction, and the plurality of cell holders 130 are arrayed to correspond to the plurality of energy storage elements 100. As illustrated in FIGS. 6 and 7, the protruding portion 70 is arrayed between the bottom surface cover portion 136 of each of the plurality of cell holders 130 and the bottom wall portion 19.

As described above, in the present embodiment, the protruding portions 70 are arrayed in a dispersed manner in the X-axis direction. Therefore, no protruding portion 70 exists at a position opposed to a gap between the adjacently arrayed bottom surface cover portions 136. This is advantageous, for example, in the circulation of air inside the exterior body 10 (i.e., heat dissipation of the energy storage element 100). The presence of a space on the lower side (i.e., in the Z-axis negative direction) of an end portion of the bottom surface cover portion 136 in the X-axis direction is advantageous when, for example, the bottom surface cover portion 136 is deformed as will be described below.

Specifically, the bottom surface cover portion 136 includes the projecting portions 136a, which are provided at the end portion of the bottom surface cover portion 136 in the projecting direction of projecting from the holder body portion 134, and are projected toward the bottom surface 110c of the energy storage element 100. As can be seen from FIGS. 5 to 7, for example, the protruding portion 70 is arrayed in a range that overlaps the holder body portion 134 but does not overlap the projecting portions 136a when seen from the Z-axis direction.

According to this configuration, when seen from the Z-axis direction, the protruding portion 70 is at a position not overlapping the projecting portions 136a. When the projecting portions 136a are pressed from the bottom surface 110c of the energy storage element 100, a portion of the bottom surface cover portion 136 including the projecting portions 136a is able to warp in the Z-axis negative direction. The bottom surface cover portion 136 can push back the energy storage element 100 in the projecting direction (the Z-axis positive direction) of the projecting portions 136a. The cell holder 130 can hold the energy storage element 100 more reliably or more accurately. **In** the present embodiment, the cell holder 130 includes the upper surface cover portion 137 (see FIG. 5). Therefore, the Z-axis direction position of the energy storage element 100 pushed upward by the bottom surface cover portion 136 can be determined by the upper surface cover portion 137. As a result, in a state in which the plurality of cell holders 130 holding the energy storage elements 100 are aligned in the X-axis direction, the positions of the electrode terminals 120 of the plurality of energy storage elements 100 in the Z-axis direction become substantially uniform. For example, when one bus bar 60 is to be joined to the plurality of electrode terminals 120 by welding or the like, these electrode terminals 120 and the bus bar 60 can be joined to each other with high accuracy.

In the above, the energy storage apparatus 1 according to the embodiment has been described focusing on the configurations of the protruding portion 70 and the periphery of the protruding portion 70. However, the configurations of the protruding portion 70 and the periphery of the protruding portion 70 may be different from the configurations indicated in FIGS. 2 to 8. In the following, modification examples of the configurations of the protruding portion 70 and the periphery of the protruding portion 70 will be described focusing on differences from the above-described embodiment.

### [3. Modification Example]

FIG. 9 is a cross-sectional view schematically showing the configuration of a cell holder 130a according to a modification example of the embodiment. As illustrated in FIG. 9, an energy storage apparatus 1a according to the present modification example is provided with the energy storage element 100, a metallic exterior body 10a, and a cell holder 130a. The cell holder 130a includes the holder body portion 134 extending along the long side surface 110a (see FIG. 3) of the energy storage element 100, and the bottom surface cover portion 136 connected to an end portion of the holder body portion 134 in the Z-axis negative direction and covers a part of the bottom surface 110c of the energy storage element 100. Further, the bottom surface cover portion 136 of the cell holder 130 and the bottom wall portion 19 of the metallic exterior body 10a are separated from each other by a protruding portion 75. The protruding portion 75 is formed such that a size of the protruding portion 75 fits within an array range of the bottom surface cover portion 136 in the X-axis direction. Configurations thereof are common to those of the energy storage apparatus 1 according to the above-described embodiment. In the energy storage apparatus 1a according to the present modification example, the protruding portion 75 is arrayed as a part of the cell holder 130, and the energy storage apparatus 1a is different from the energy storage apparatus 1 according to the above-described embodiment in this respect.

Even in this case, the advantage of extension of the creepage distance by the protruding portion 75 and the bottom surface cover portion 136 can be obtained. If no protruding portion 75 is provided, a creepage distance between the energy storage element 100 and the metallic bottom wall portion 19a is approximately the thickness of the bottom surface cover portion 136. However, in the energy storage apparatus 1a according to the present modification example, since the cell holder 130 is provided with the protruding portion 75, the creepage distance is increased at least by the width (projected length) of the protruding portion 75 in the Z-axis direction. In the present modification example, the bottom surface cover portion 136 is projected from the protruding portion 75 in the X-axis direction by a projected length L'. Accordingly, as the creepage distance between the energy storage element 100 and the bottom wall portion 19a, at least a length obtained by adding the projected length L' to the thickness of the bottom surface cover portion 136 and the width of the protruding portion 75 in the Z-axis direction is secured. The energy storage element 100 and a metallic member (the bottom wall portion 19a) that is positioned below (i.e., in the Z-axis negative direction) relative to the energy storage element 100 are more reliably insulated from each other.

### [4. Other Modification Examples]

The energy storage apparatus 1 according to the embodiment of the present invention has been described above. However, the present invention is not limited to this embodiment. The embodiment disclosed herein is illustrative in all respects and not restrictive. The scope of the present invention includes all modifications within the meaning and scope equivalent to the claims.

In the above-described embodiment, the protruding portion 70, which is a part of the exterior body 10, is formed together with portions of the exterior body main body 12 other than the protruding portion 70 when the entire exterior body main body 12 is formed by casting or cutting, etc. The protruding portion 70, which is a part of the exterior body 10, may be a member fixed to the bottom wall portion 19 of the exterior body main body 12 by welding or adhesion, etc. The protruding portion 70, which is a part of the exterior body 10, may be realized by having the protruding portion 70 that is formed of a material other than metal, such as resin, fixed to the bottom wall portion 19 by welding (welding without a clearly melted part in an appearance thereof) or adhesion, etc.

The bottom surface cover portion 136 of the cell holder 130 may not necessarily be projected from the holder body portion 134 to both sides in the X-axis direction. Specifically, the cell holder 130 indicated in FIGS. 5 and 8 corresponds to the cell holder 130 (the cell holder 132, see FIG. 3) positioned between two energy storage elements 100 that are adjacent to each other. The cell holder 132 has a configuration for holding these two energy storage elements 100. The bottom surface cover portion 136 is projected from the holder body portion 134 to both sides in the X-axis direction so as to cover a part of the bottom surface 110c of each of these two energy storage elements 100. However, in the case of a pair of cell holders 130 (the cell holders 131, see FIG. 3) positioned at both ends in the X-axis direction in the energy storage element unit 20, the cell holder 131 may hold only one energy storage element 100. Therefore, the bottom surface cover portion 136 is projected from the holder body portion 134 only to one side in the X-axis direction (the X-axis positive direction or the X-axis negative direction). Even in this case, since the protruding portion 70 of a size that fits within an array range of the bottom surface cover portion 136 in the X-axis direction is provided, it is possible to set the creepage distance between the energy storage element 100 and the protruding portion 70 to a length necessary for ensuring safety. This also applies to a case where a protruding portion is provided on a cell holder as in the cell holder 130a indicated in FIG. 9.

The exterior body 10 which accommodates the energy storage element unit 20 may not necessarily be a housing which constitutes an outermost shell of the energy storage apparatus 1. A case which is arrayed inside a housing which constitutes the outermost shell of the energy storage apparatus 1, and includes a bottom wall portion opposed to the bottom surface 110c of the energy storage element 100 may be employed as the exterior body 10. A case including one or more opening portions for heat dissipation or the like in a wall portion (the side wall portion 17 or the like), which serves as a partition between the inside and the outside of the exterior body 10, may be employed as the exterior body 10.

In the plurality of energy storage elements 100 provided in the energy storage apparatus 1, the cell holder 130 (the cell holder 132, see FIG. 3) may not necessarily be disposed between all of the two adjacently arrayed energy storage elements 100. When the two adjacently arrayed energy storage elements 100 are electrically connected in parallel, the cell holder 130 may not necessarily be disposed between these two energy storage elements 100. Even in this case, since each of these two energy storage elements 100 is held by one cell holder 130, it is possible to restrict the movement of these two energy storage elements 100 inside the exterior body 10. When no cell holder 130 is disposed between the two adjacently arrayed energy storage elements 100, a mere flat plate-shaped insulating member (a spacer) may be disposed as a member for insulating between the containers 110 of these two energy storage elements 100. For insulation between the containers 110 of the two adjacently arrayed energy storage elements 100, an insulating sheet may be wound around each of these two containers 110.

The energy storage element unit 20 may include not only the plurality of energy storage elements 100 and the plurality of cell holders 130 but also the plurality of bus bars 60 joined to the electrode terminals 120 of the plurality of energy storage elements 100 and the bus bar holder 30 (see FIG. 2). A configuration in which the bus bar holder 30 and the plurality of bus bars 60 are added to the energy storage element unit 20 according to the embodiment may be referred to as an "energy storage element unit".

Forms constructed by arbitrarily combining constituent elements included in the above-described embodiment and the modification examples thereof are also included in the scope of the present invention.

### INDUSTRIAL APPLICABILITY

The present invention can be applied to an energy storage apparatus provided with an energy storage element such as a lithium-ion secondary battery.

### DESCRIPTION OF REFERENCE NUMERALS

1, 1a energy storage apparatus
10, 10a exterior body
11 cover body
12 exterior body main body
15, 17 side wall portion
19 bottom wall portion
70, 75 protruding portion
100 energy storage element
110 container
110c bottom surface
130, 130a, 131, 132 cell holder
134 holder body portion
136 bottom surface cover portion
136a projecting portion

## Claims

1. An energy storage apparatus comprising:
an energy storage element including a side surface and a bottom surface, and is arrayed in such a posture that the side surface is oriented in a first direction and the bottom surface is oriented in a second direction orthogonal to the first direction;
a metallic exterior body including a bottom wall portion opposed to the bottom surface in the second direction; and
a holding member including a holding body portion extending along the side surface, and a bottom surface cover portion connected to an end portion of the holding body portion in the second direction and covers a part of the bottom surface,
wherein at least one of the exterior body and the holding member is provided with a protruding portion separating the bottom wall portion and the bottom surface cover portion from each other in the second direction, and is provided such that a size of the protruding portion fits within an array range of the bottom surface cover portion in the first direction.

2. The energy storage apparatus according to claim 1, wherein
the protruding portion is a part of the exterior body and is projected from the bottom wall portion.

3. The energy storage apparatus according to claim 2, wherein
the exterior body includes a side wall portion opposed to the energy storage element in a direction orthogonal to the second direction, and
the protruding portion is connected to the side wall portion.

4. The energy storage apparatus according to any one of claims 1 to 3, wherein
when seen from the second direction, the bottom surface cover portion is formed in such a length as to be projected relative to the protruding portion in the first direction.

5. The energy storage apparatus according to any one of claims 1 to 3, wherein
the bottom surface cover portion is elongated in a third direction orthogonal to the first direction and the second direction, and
the protruding portion is arrayed between each of both end portions of the bottom surface cover portion in the third direction and the bottom wall portion.

6. The energy storage apparatus according to any one of claims 1 to 3, wherein
a plurality of energy storage elements included in the energy storage element are arrayed to be aligned in the first direction,
a plurality of holding members included in the holding member are arrayed to correspond to the plurality of energy storage elements, and
the protruding portion is arrayed between the bottom surface cover portion of each of the plurality of holding members and the bottom wall portion.

7. The energy storage apparatus according to any one of claims 1 to 3, wherein
the bottom surface cover portion includes a projecting portion projected toward the bottom surface of the energy storage element, and
the protruding portion is arrayed in a range that overlaps the holding body portion but does not overlap the projecting portion when seen from the second direction.
